# EUROPEAN PATENT APPLICATION

(11) **EP 4 044 026 A1**
(43) Date of publication of application: **17.08.2022**
(21) Application number: 20873592.8
(22) Date of filing: 06.10.2020
(51) Int. Cl.: G06F 9/00, G06F 21/64, G06Q 20/02

(54) **METHOD AND SYSTEM FOR VERIFYING DOCUMENTS**

(30) Priority: 07.10.2019 RU 2019131572
(71) Applicant: Dobryakova, Galina Eduardovna, Moscow, 127576 (RU)
(72) Inventor: Dobryakova, Galina Eduardovna, Moscow, 127576 (RU)
(74) Representative: Fortuna, Jevgenijs
(86) International application number: PCT/RU2020/000517
(87) International publication number: WO 2021/071389

(57) **Abstract**

A method of document certification and a system for its implementation is proposed. The method includes creating and/or storing the document to be certified on the user's electronic device, its transfer from the user's electronic device to the server receiving documents to be certified, saving the document to be certified in the memory device of the server receiving documents to be certified, processing the document to be certified by the data processing block which affixes to it a tag of current time, date, month and year and certifying it with an e-signature of a person authorized for such action, receiving at least one certified document, and saving the certified document on the repository server, from where it can be transferred to the user at any time. The technical results of the described method are simplification of document certification and increased security of the stored documents to be certified.

## Description

The invention relates to the field of information systems and electronic document exchange systems.

Russian patent No. 2158956 as of November 10, 2000 is known, which describes a transaction management system. The system includes many management devices of the transaction participants, connected through a communication channel with the management device and certificate storage and verification device which is connected to a centralized control unit, which includes devices for registration of system participants, unit for creating and storing the database on transactions between the system participants, database creation and storage unit, and a data management unit.

The drawbacks of this system include impossibility of verification of the time of a legally significant act by the system operator, limited functionality due to the system design, and multiple devices that the user has to purchase. The system does not involve electronic attorneys (commission contracts) or agents (agency agreements) when concluding transactions, which significantly limits the scope of its application. The system is only focused on sale and purchase of products and services and does not cover other commercial and non-commercial spheres (e.g., filing legally significant applications to state authorities, profit and non-profit companies; submitting declarations and reports to the regulatory agencies; obtaining legally significant responses; generating and issuing legally significant instructions; legally significant business correspondence, etc.). Herewith, the system does not involve connection with other systems that are similar or close in functionality.

The closest analogous solution of the proposed technical solution is Russian patent No. 117198 as of June 20, 2012, which describes the system of a trusted legally binding electronic document exchange. This system includes numerous management devices of the system participants connected through the communication channel with the management device and certificate storage and verification device, which is connected to a centralized control unit, which includes the system participant registration device, device for creating and storing the database on transactions between the system participants, database creation and storage device, and a data management device. Herewith, the system is additionally equipped with the electronic attorney (EA) control device coupled with a content management device, a certificate database, a document database and the general workstation of a system participant, which includes a management device connected with a message entry device, message display device, printing module, encoding/decoding device, and communication unit; herewith, the EA control device is equipped with storages in the form of identifiers and templates databases defined by the requirements of the organizers of the information transmission network and by the recipients of the legally significant information, and through the encoding/decoding device, communication module, via communication channels it is coupled with the control device and transaction management system, which includes certificate storage and verification device and centralized control unit, with a finance system, tax authorities system, state authorities system, institutional system and electronic trading platforms; herewith, the control unit is additionally equipped with a reader/writer, which includes a data carrier and an identifiers carrier, and additional storages in the form of databases of identifiers, certificates, templates and documents which set the requirements to the functionality of the system and recipients of the legally significant information, and the document database connected with the management device is additionally connected with the encoding/decoding device.

The drawbacks of this system include impossibility of verification of the time of legally significant act by the system operator, use of multiple devices which require purchase of a device/certificate by the user, thus increasing the platform entry threshold for the market participants and requiring from market participants specific knowledge in the field of key and certificate management, and the need to obtain an e-signature, which reduces the mobility of participants when making transactions and requires pre-installed software on the user's device. Herewith, the system does not involve connection with other systems that are similar or close in functionality.

Furthermore, the system cannot be used on mobile devices and does not use other available e-channels generally used by the user, since it requires a PC connection, which significantly reduces mobility of this solution.

The user cannot take an action when it is necessary (e.g., sign an agreement or certify an electronic evidence at the moment of discovery thereof). At the same time, there is a risk of loss of response time. When the user is ready, the agreement will be signed with another user or the information will be erased and it will be impossible to record the fact of violation.

The technical problem solved by using the developed method involves expansion of the capabilities of electronic document flow by eliminating the need to obtain an e-signature, abandoning the need to use devices with preinstalled software and expanding the user's capabilities by enabling them to use any device and any available electronic communication channel, which ensures identification. Any user, using any device with Internet access (including a local network, with a connected module for secure access to the server) can, without preliminary preparation, with only an email and/or a mobile phone number, register their profile and take legally significant actions, responding in minutes.

The technical result is simplification of document certification and increased security of the stored documents to be certified.

The technical result is achieved by the fact that the first option of document certification includes:
- creating and/or storing of at least one document to be certified or a link to a document to be certified on the user's electronics device;
- transmitting of at least one document to be certified or a link to a document to be certified from the user's electronic device to the server receiving documents to be certified via the data communication network;
- saving by the system of at least one document to be certified in the memory device of the server receiving documents to be certified;
- processing each document being certified with a data processing unit affixing to it a tag of current time, date, month and year and certifying it with an e-signature of a person authorized for such action and receiving at least one certified document;
- saving of at least one certified document on the repository server;
- sending of at least one certified document from the repository server to the user's electronic device;
- if necessary, transforming of at least one certified document to a human-readable format that meets the requirements for electronic evidence.

Herewith, sending of the document to be certified from the user's electronic device to the server receiving documents to be certified is made through an encrypted communication channel.

Furthermore, at least one certified document is sent from the repository server to the user's electronic device.

The second option of document certifications includes:
- creating in the data creating system and/or transferring in the data communication system and/or saving by the user via the data communication network in the third-party data storage system of at least one document to be certified as a file or archive folder, (during registration, the system user connects the storage where they create data, e.g. git-type repositories, and further work is done at the repository. According to the scenario, the system connected to the repository generates an image (template) and stores the file image and time of data creation in the third-party system, with generation of electronic evidence that confirms the creation of the work and contains the required elements to ensure evidence status.

A possible scenario includes connection of data communication systems and content posting cloud platforms, such as deposit photo; before posting, the system generates a reference image and saves the image and time of data creation in the third-party system, generating electronic evidence confirming creation of the work and containing the required elements to ensure evidence status.
- connecting the user via the data communication network to the server receiving documents to be certified and indicating in it of a third-party data generation system and/or data communication system and/or data storage system, where the documents to be certified are stored, and documents certification scenario for external systems, (the user uploads the file into a system file storage to save a file image and the time of data creation in the third-party system, generating electronic evidence confirming creation of the work and containing the required elements to ensure evidence status);
- in accordance with the given scenario or user's scenario, the server receiving documents to be certified copies and/or uploads and/or calculates the hash amount of the file or the archive folder and/or other means of identification of the file image of at least one document being certified from the third-party data generation system and/or data communication system and/or data storage system, (during registration, the system user connects a storage, where they create data, e,g. git-type repositories, and further work is done at the repository. Herewith, file processing, hash amount calculation, and determining of the identification parameters take place in the third-party system which sends the data via API to the data processing unit.

Thus, the files and file images do not leave the third-party system, preventing data leakage, while the created security document contains a link to the third-party system which enables identification and comparison of the file).
- saving of at least one document being certified and/or electronic evidence of document certification in the memory device of the server receiving documents to be certified;
- processing each document being certified by a data processing block by calculation the hash amount of the file and/or other means of identification of the file image by affixing to it a tag of current time, date, month and year, and their certification with an electronic signature of a person authorized for such action and receiving at least one certified document;
- storing of at least one certified document on the repository server;
- copying of at least one certified document from the repository server to the server and/or third-party document storage system;
- calculating the hash amount of the file and/or other means of identification of the file image without copying the certified document from the repository server to the data storage system;
- if necessary, transforming of at least one certified document and/or electronic evidence of document certification in the local and the English languages to a human-readable format that meets the requirements for electronic evidence.

A third-party data generation system is any known data generation system, incl. machine data such as AI and/or neural network, a third-party data communication system is any known data communication system that transfers the documents being certified and/or their images, a third-party data storage system is any known "cloud" storage or repository or networked storage of any company.

The document certification scenario involves calculation of the hash amount of the file or an archive folder and/or other means of identification of the file image, identification data of the owner of the file/archive folder, time characteristics of the date of creation of the file/archive folder, generation of the electronic evidence of document certification and estimating the fact of identity of the file image with previously created certified document.

In accordance with the document certification scenario, after the initial document was processed and the hash amount of the file or archive folder and/or other means of identification of the file image was calculated, it is deleted from the data processing operating server, while the operating server only stores an electronic evidence of document certification with a link to the initial document storage location.

The above methods are implemented by the document certification system, including:
- at least one user's electronic device able to send the document to be certified to the server receiving the documents to be certified;
- a server receiving the documents to be certified;
- certified document storage device;
- a data processing block able to process each document being certified by affixing to it a tag of current time, date, month and year, and to certify it with an electronic signature of a person authorized for such action and to obtain at least one certified document;
- a repository server able to store permanently at least one certified document and send it to the user's electronic device;

In the proposed document certification system the user's electronic device is able to send the document to be certified via a wired or wireless data network.

Furthermore, the storage device for the documents to be certified and/or repository server storage unit can be cloud storages.

Apart from that, the repository server is additionally connected to the printing module in order to transform at least one certified document to a human-readable format that meets the requirements for electronic evidence.
The operation method according to the first option of the method is shown in Fig.

Applying the developed method enables generation and storage of various types of documents to be certified or information necessary for submission to judicial or law enforcement agencies, including upon their official request for such documents. Furthermore, this method enables registering and confirming facts of performing of various transactions, or exchanging information between the parties of interest, indicating the date of publication and the electronic communication channel used to identify the user.

In addition, applying the developed method enables participation in the electronic exchange of digital data transmitted through the clients of the proposed system who do not own automated information processing systems; the documents and materials certified in accordance with the developed method can be sent and shall be accepted as evidence by any companies, state bodies, local authorities, law enforcement and judicial agencies.

Herewith, the user can access the proposed system from any device through two-factor authentication - a login/password pair and by obtaining a dynamic link to any selected channel of the user (cellphone, messenger, e-mail), and confirmation of user's action by a test writing off from the bank card or any other payment means of the user.

Invoicing and writing off of the user's money can be made as follows:
- at basic rate: immediately after the provision of a certification service;
- at advanced rate: the user purchases the licence and gets access to the service without constant writing off from the card or invoicing. The system includes invoice function, so the user knows what they paid for and which payments they received.

Thus, the user can use the system even without access to the mobile operator (the user is in roaming or does not wish to use the mobile service), of when the user is unable to get and read e-mails (due to loss of access or lack of e-mail address) or in case of absence of a bank card (but with other means of payment, e.g., a messenger).

The key difference of the technical solution from the previous ones is the possibility to certify documents and verification by the system operator of the time of action performed by the user with any device without requirements for the specific end device, pre-installed software or key (certificate), and full mobility of the user, as well as abandoning of other barriers, both time- and process-related ones, when making a legally significant action or certifying the evidence.

The key difference of the proposed method also includes expansion of the user's capabilities by enabling them to use any device or any available electronic communication channel that enables authentication. Any user, using any device with Internet access (including a local network) can, without preliminary preparation, with only an email and/or a mobile phone number, register their profile and take legally significant actions, responding in minutes.

This method makes it possible to register any number of actions with minimal system load, which provides a high level of performance that depends solely on the user's speed and can be up to 10 operations per minute.

The developed method can be applied in two options:
- according to the first option, to register and certify a fact of performance of a legally significant action by the user (e.g., a contract). If necessary, the user can get a link to the saved copy or request a confirmation certificate;
- according to the second option, to register and certify information contained on websites (Internet pages) in the Internet by pasting the URL of the link to the respective window of the developed system, while the system automatically performs the following: makes a screenshot of the page and saves it in electronic format, makes screenshots of all pages and elements available through the link, affixing the time tags to ensure certification of evidence.

The second option is best applicable for:
- registering the terms of public offer agreements, service agreements, and their cost, as well as for selling goods on the Internet;
- registering the facts of services and their quality, when such services involve creating, maintaining and adding content to the Internet resources;
- registering the terms of tenders for the supply of products and provision of services, terms of state purchase contracts, and other information;
- registering unlawful or illegal posting of materials on Internet pages:
- illegal use of trademarks, service marks, photo and video materials,
- violation of copyright, related and patent rights,
- libel, posting of compromising material,
- plagiarism,
- inaccurate information.

Within the digital economy, the parties take legally significant actions at any time, place and using any device that may not have the preinstalled software required for the exchange of legally significant electronic documents.

The need to ensure maximum mobility makes the parties develop a fundamentally different system of interaction that does not require preliminary actions, such as authorization of identity confirmation, which is available on any user's device and does not involve pre-installed software.

If users use the service, they can make a legally significant action related to signing a contract, approving a transaction, offering agreement terms or certifying an evidence without the need to obtain an e-signature, at any time, without special preparation or special technical knowledge.

When the user requires proof of a legally significant action, they can submit a certificate confirming a legally significant action to the court by submission of the documents to be certified stored in the system, while these documents may be sent to the user both electronically and in hard copy signed by a person authorized for certification.

It is often required to submit a screenshot of an Internet resource to confirm posting of disputable information at a certain time. A printed screenshot of the website is not certified and will not serve as sufficient evidence in case of litigation. However, if an independent party using the proposed method and system documents it, which is confirmed by a certificate, it will be hard to rebut its credibility.

Today, communication and exchange of certificates of services rendered, claims, and other documents related to agreements is often made via e-mail, which ensures prompt solution of any issue. However, when exchanging information and documents through electronic services there is a possibility that an unfair party may deliberately deny the fact of receiving the information and/or documents sent to it resting upon the fact that the user could have deleted the information or that it would be difficult to apply to operator with the request to restore the e-mail.

Such circumstances, in their turn, often entailed violation of rights and interests of the sender, who, in case of a conflict or litigation, was unable to refer to any such communication and exchange of documents for a number of reasons, including due to the lack of credible guarantee and confirmation of the fact of sending the documents. Therefore, if a company uses the described method, it can submit to the court a certificate confirming the fact of performance of a legally significant action by activating a system link, which constitutes proper evidence.

Today, the situations when inaccurate information of goods, services, etc., or materials discrediting someone's honor and dignity, or trademarks are used illegally, or photos posted without the consent of their owners for publication and demonstration, etc. are posted on the Internet have become frequent. Sometimes, it takes a citizen a long time to restore their rights and good name, and during that time the information previously posted can be deleted, replaced or corrected, which can help the offenders to escape responsibility, while a printed screenshot of the website is not certified and will not constitute sufficient evidence in case of litigation. With the help of the above method the information contained on websites (internet-pages) on the Internet can be registered. The saved Internet-pages will be available at any time in My Account of the information system; if necessary, the internet-page certified by the information system can be used as evidence in any disputable situation, if there will be no access to the website at a later date.

This method allows to remotely record, save in the user's own database and confirm credibility and unalterability of the information stored on the server of the system: screenshots, mail communication, or files of any type.

The method also allows access to the server of the information system via remote access software or with the help of the operator and further enter the resources requiring authentication and record any information.

The method enables storing all the recorded materials on the server of the information system under a private account of the user with the possibility to order a certified copy, including in hard copy.

The method enables the information system to certify the information stored on the system server and requested by the user and confirm its integrity and unalterability.

The method enables the information system to take screenshots by visiting the specified Internet address according to the schedule created by the user.

The method enables the information system to save the copies of emails sent by the user and store them unchanged on the server.

The method enables the information system to record and confirm availability on various websites of the following: video, flash, graphics and other content that can be stored in the system memory.

The method is implemented according to the following algorithm:
1. The user is authorized on the server for uploading documents using any device by entering a login/password pair and/or providing their photo with the open passport.
2. The user selects previously saved document on their device or an URL-link to a resource to be certified and by means of soft- and hardware sends it to the document receiving server of the proposed system.
3. The document receiving server of the proposed system identifies the user, finds or generates for this user the amount of memory allocated for them in the document storage device and stores the information or documents to be certified there.
4. Then, the saved information or documents are affixed with the time, date and year by the information processing block and certified with an e-signature of a person authorized for such action, with obtaining of at least one certified document. This operation may be performed manually by an authorized person or automatically with software.
5. The document generated by the proposed system is stored on the repository server, from which its copy can be at any time sent to the user or printed out with additional certification by a person authorized for such action.

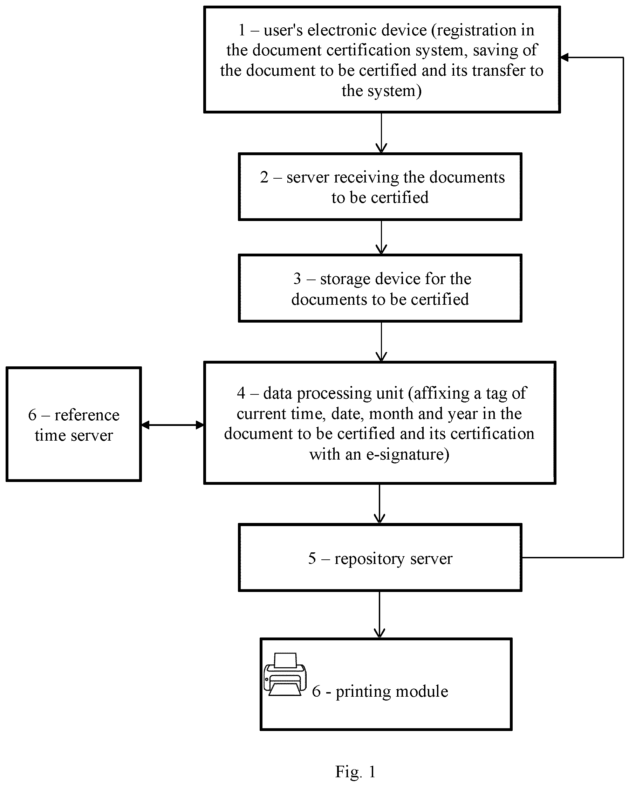

## Claims

1. Document certification method including:
- creating and/or storing of at least one document to be certified or a link to a document to be certified on the user's electronic device;
- transmitting of at least one document to be certified or a link to a document to be certified from the user's electronic device to the server receiving documents to be certified via the data communication network;
- saving at least one document to be certified in the memory device of the server receiving documents to be certified;
- processing each document being certified by a data processing block by affixing to it a tag of current time, date, month and year and certifying it with an e-signature of a person authorized for such action and receiving at least one certified document;
- saving at least one certified document on the repository server;
- sending at least one certified document from the repository server to the user's electronic device;
- if necessary, transforming of at least one certified document to a human-readable format that meets the requirements for electronic evidence.

2. Document certification method as per it. 1 of the patent claim wherein the document to be certified is transferred from the user's device to the server receiving documents to be certified via an encrypted communication channel.

3. Document certification method as per it. 1 of the patent claim wherein at least one document to be certified is additionally sent from the repository server to the user's electronic device.

4. Document certification method including:
- creation in the data creating system and/or transferring in the data communication system and/or saving by the user with the help of the data communication network in the third-party data storage system of at least one document to be certified as a file or an archive folder;
- connecting the user via the data communication network to the server receiving documents to be certified and indicating in it of a third-party data generation system and/or data communication system and/or data storage system, where the documents to be certified are stored, and documents certification scenario for external systems;
- in accordance with the given scenario or user's scenario, the server receiving documents to be certified copies and/or uploads and/or calculates the hash-amount of the file or archive folder and/or other means of identification of the file image of at least one document to be certified from the third-party data generation system and/or data communication system and/or data storage system;
- saving at least one document to be certified and/or electronic evidence of document certification in the memory device of the server receiving documents to be certified;
- processing each document being certified by a data processing block by calculation the hash amount of the file and/or other means of identification of the file image by affixing to it a tag of current time, date, month and year, and their certification with an electronic signature of a person authorized for such action and receiving at least one certified document;
- storing of at least one certified document on the repository server;
- copying of at least one certified document from the repository server to the server and/or third-party document storage system;
- calculating the hash amount of the file and/or other means of identification of the file image without copying the certified document from the repository server to the data storage system;
- if necessary, transforming of at least one certified document and/or electronic evidence of document certification in the local and the English languages to a the human-readable format that meets the requirements for electronic evidence.

5. Document certification method as per it. 4 of the patent claim wherein a third-party data generation system is any known data generation system, incl. machine data such as AI and/or neural network, a third-party data communication system is any known data communication system that transfers the documents being certified and/or their images, a third-party data storage system is any known "cloud" storage or repository or networked storage of any company.

6. Document certification method as per it. 4 of the patent claim wherein document certification scenario includes calculation of the hash amount of the file or archive folder and/or other means of identification of the file image, identification data of the owner of the file/archive folder, time characteristics of the date of creation of the file/archive folder, generation of the electronic evidence of document certification and estimating the fact of identity of the file image with previously created certified document.

7. Document certification method as per it. 4 of the patent claim wherein in accordance with the document certification scenario, after the initial document was processed and the hash amount of the file or archive folder and/or other means of identification of the file image was calculated, it is deleted from the data processing operating server, while the operating server only stores an electronic evidence of document certification fact with a link to the initial document storage location.

8. Document certification system including:
- at least one electronic device of the user that is able to send the document to be certified to the server receiving the documents to be certified;
- server receiving the documents to be certified;
- storage device for the documents to be certified;
- data processing block, able to process each document to be certified by affixing to it a tag of current time, date, month and year, and to certify it with an electronic signature of a person authorized for such action and obtain at least one document to be certified;
- repository server able to permanently store at least one document to be certified and send it to the user's electronic device;

9. Document certification system as per it. 8 wherein the user's electronic device is able to transfer the document to be certified via a wired or wireless data network;

10. Document certification system as per it. 8 wherein the memory device for the documents to be certified and/or storage unit of the repository server are cloud storages.

11. Document certification system as per it. 8 wherein the repository server is additionally connected to a printing module.
